# EUROPÄISCHE PATENTSCHRIFT

(11) **EP 1 431 142 B1**
(45) Veröffentlichungstag und Bekanntmachung des Hinweises auf die Patenterteilung: **13.09.2006**
(21) Anmeldenummer: 03012391.3
(22) Anmeldetag: 30.05.2003
(51) Int. Cl.: B60S 1/08, G01N 21/45

(54) **Regensensor, insbesondere für ein Kraftfahrzeug und Verfahren zu dessen Herstellung**
Rain sensor, in particular for a vehicle and method for producing it
Capteur de pluie, en particulier pour un véhicule et méthode pour sa fabrication

(30) Priorität: 20.12.2002 DE 10261102
(43) Veröffentlichungstag der Anmeldung: 23.06.2004
(73) Patentinhaber: ROBERT BOSCH GMBH, 70442 Stuttgart (DE)
(72) Erfinder: Stampfer, Stefan, 77815 Buehl (DE)

(56) Entgegenhaltungen:
- EP-A- 0 919 443
- EP-A- 1 101 673

## Beschreibung

Die Erfindung betrifft einen Regensensor, insbesondere für ein Kraftfahrzeug sowie ein Verfahren zu dessen Herstellung nach Gattung der unabhängigen Ansprüche, wie z.B. in der EP 1101673 A offenbart.

### Stand der Technik

Es sind Regensensoren in zahlreichen unterschiedlichen Ausführungsformen bekannt. Üblicherweise besteht ein solcher Sensor aus einer optischen Sende-Empfangsstrecke. Ein unter einem Winkel von ca. 42 bis 65 Grad in die Fahrzeugscheibe eingekoppeltes Licht wird unter Totalreflexion an der trockenen äußeren Grenzfläche reflektiert und trifft in einen in passendem Winkel ausgerichteten optischen Empfänger. Stehen Wassertropfen oder steht ein Wasserfilm auf der Außenfläche der Scheibe, so tritt keine Totalreflexion mehr auf, sondern es wird ein erheblicher Teil des Lichts nach außen abgestrahlt. Das Empfangssignal wird dadurch deutlich geschwächt. Der Grad dieser Abschwächung kann als Maß für die Benetzung der Scheibe mit Wasser verwendet werden. Das gewonnene Signal kann bspw. als Eingangssignal einer Einschaltsteuerung einer Scheibenwischvorrichtung dienen, wie es beispielsweise aus der DE 198 27 541 A1 oder aus der DE 196 43 465 A1 hervor geht.

Gattungsgemäße Regensensoren mit optischen Sende-Empfangsstrecken sind u.a. aus der DE 198 39 273 A1, aus der DE 198 46 968 A1, aus der DE 198 46 969 A1, aus der DE 100 41 776 A1 oder aus der DE 100 60 964 A1 bekannt.

Die bekannten Regensensoren weisen an einer der Scheibe zugewandten Seite wenigstens einen Lichtaustrittsbereich sowie einen Lichteintrittsbereich auf. Diese Bereiche müssen aus einem Material bestehen, das für den Wellenlängenbereich des hindurch tretenden Lichts weitgehend durchlässig ist. Zur Abschirmung von möglicherweise störendem Umgebungslicht sind die übrigen Bereiche zweckmäßigerweise aus für diesen Wellenlängenbereich nicht transparentem Material gefertigt, damit Licht nur über die vorgesehenen Lichtkanäle zu den lichtdetektierenden Bauelementen auf der Leiterplatte gelangen kann.

Diese nicht transparenten Bereiche des Regensensors werden typischerweise auch als Fremdlichtsperre bezeichnet. Eine solche Fremdlichtsperre kann bspw. aus einer nicht transparenten Silikonschicht bestehen, die auf die Unterseite eines Kunststofflichtleiters aufgespritzt ist und zumindest für die im Regensensor verarbeiteten Wellenlängenbereiche nicht durchlässig ist. Eine Fremdlichtsperre kann wahlweise auch durch eine Metallbeschichtung realisiert sein, die auf die Oberseite des transparenten Lichtleiters aufgedampft bzw. aufgesputtert sein kann.

### Vorteile der Erfindung

Bei einem Regensensor, der eine Messstrecke mit wenigstens einem Sender und wenigstens einem Empfänger für elektromagnetische Wellen eines bestimmten Wellenlängenbereichs aufweist, ist in der Messstrecke eine die Wellenausbreitung zwischen dem Sender und dem Empfänger beeinflussende Glasscheibe angeordnet. Die Beeinflussung erfolgt derart, dass sich bei Ausbildung eines Belages auf der Scheibe ein vom Empfänger detektiertes Ausgangssignal ändert. Der Regensensor weist weiterhin Strukturen zur Ein- und Auskoppelung der elektromagnetischen Wellen auf, die strahlungsbündelnde Eigenschaften aufweisen. Die Strukturen sind zumindest für die Wellenlängenbereiche durchlässig, die vom Sender emittiert und vom Empfänger detektiert werden. Auf die Strukturen ist in Bereichen außerhalb der Messstrecke eine Fremdlichtsperre aufgebracht, die zumindest für die vom Sender emittierten und vom Empfänger detektierten Wellenlängenbereiche der elektromagnetischen Wellen nicht durchlässig ist.

Die elektromagnetischen Wellen sind bei einer bevorzugten Ausgestaltung bzw. Anwendung des Regensensors Lichtwellen. Diese können im Wesentlichen Wellenlängenanteile im sichtbaren Bereich als auch im nicht sichtbaren Bereich aufweisen. Insbesondere Infrarotlicht eignet sich gut für die vorliegende Anwendung. Bei der Glasscheibe handelt es sich vorzugsweise um eine Windschutzscheibe eines Kraftfahrzeuges, bei dem der Regensensor vorzugsweise zum Einsatz kommt. Der Belag auf der Windschutzscheibe kann insbesondere ein feuchter Niederschlag, bspw. Regen oder Nebel sein.

Der Regensensor weist eine sog. Fremdlichtsperre auf, die vorzugsweise als formstabile oder als nicht formstabile Komponente auf die formstabilen Strukturen aufgebracht ist und für eine Verbesserung der Signalgüte durch Abschirmung von Fremdlichtanteilen sorgt. Die Strukturen zur Ein- und Auskoppelung der elektromagnetischen Wellen bestehen vorzugsweise im Wesentlichen aus transparentem Kunststoff, insbesondere aus spritzgegossenem Kunststoff.

Die Strukturen lassen sich besonders vorteilhaft als integriertes Strukturbauteil herstellen. Hierauf lässt sich die Fremdlichtsperre in einfacher Weise aufbringen, bspw. als Kunststoffschicht, die nur in den Bereichen der Messstrecke für die elektromagnetischen Wellen durchlässig bzw. transparent ist. In Bereichen der Messstrecke kann diese Kunststoffschicht vorzugsweise mit Öffnungen versehen sein, die sich insbesondere durch Ausstanzen an den vorgesehenen Stellen herstellen lassen.

Eine bevorzugte Ausgestaltung der Erfindung sieht vor, dass die Kunststoffschicht eine mehrschichtige Kunststofffolie ist, die aus wenigstens zwei übereinander angeordneten Schichten besteht. Eine erste Schicht kann bspw. eine Maskenfolie sein, in welcher die Lichtaustrittsbereiche und die Lichteintrittsbereiche definiert sind. Diese Bereiche können insbesondere durch ausgestanzte Öffnungen in der Maskenfolie definiert sein.

Eine zweite Folie ist vorzugsweise eine optisch aktive Kunststofffolie, insbesondere eine Farbfolie, die eine Filterwirkung aufweist. Auf diese Weise kann eine weitere Abschirmung von Fremdlichtanteilen erreicht werden, da die Farbfolie Wellenlängenanteile eines bestimmten Bereiches nahezu ungedämpft passieren lässt und andere Bereiche mehr oder weniger stark dämpfen kann.

Die Kunststoffschicht mit dem mehrschichtigen Folienaufbau lässt sich auf die Strukturen bzw. auf das Strukturbauteil in vorteilhafter Weise mit einem sog. IMD-Verfahren aufbringen. Bei diesem sog. In-Mold-Decoration-Verfahren können Kunststoffteile im Spritzgießprozess mit einer Beschichtung versehen werden, die sich bereits in der Gießform befindet, bevor diese unter hohem Druck mit Kunststoff gefüllt wird.

Alternativ lässt sich der mehrschichtige Aufbau des Strukturbauteils bzw. der Strukturen mit einer Folien- oder Lackbeschichtung auch durch sog. Hinterspritzen, d.h. in einem zwei- oder mehrphasigen Spritzgießprozess realisieren.

Eine alternative Ausgestaltung der Erfindung sieht vor, dass die auf den Strukturen zur Ein- und Auskoppelung der elektromagnetischen Wellen bzw. auf dem Strukturbauteil befindliche Fremdlichtsperre im Wesentlichen aus einer Lackschicht besteht, die nur in den Bereichen der Messstrecke Aussparungen aufweist, die für die im Regensensor verarbeiteten Wellenlängenbereiche der elektromagnetischen Wellen durchlässig sind.

Auch eine solche, aus einer Lackschicht bestehende Fremdlichtsperre lässt sich auf einfache und kostengünstige Weise im Spritzgießprozess herstellen. Auch hierfür eignet sich insbesondere das IMD-Verfahren.

In einer alternativen Ausführungsform der Erfindung besteht die Fremdlichtsperre aus einer Metallmaske, die nur in den Bereichen der Messstrecke für die elektromagnetischen Wellen durchlässig bzw. transparent ist. In Bereichen der Messstrecke 'ist die Metallmaske mit Öffnungen versehen, die sich insbesondere durch Ausstanzen an den vorgesehenen Stellen herstellen lassen. Ggf. lässt sich eine solche, aus einer Metallmaske bestehende Fremdlichtsperre auf einfache und kostengünstige Weise in einem Druckgussprozess herstellen.

In einer weiteren alternativen Ausführungsform der Erfindung besteht die Fremdlichtsperre aus einer Keramikmaske, die nur in den Bereichen der Messstrecke für die elektromagnetischen Wellen durchlässig bzw. transparent ist. In Bereichen der Messstrecke ist die Keramikmaske mit Öffnungen versehen.

Die Maske lässt sich auf die Strukturen bzw. auf das Strukturbauteil in vorteilhafter Weise mittels des sog. IMD-Verfahren aufbringen. Alternativ lässt sich der mehrschichtige Aufbau des Strukturbauteils bzw. der Strukturen mit der Metall- oder Keramikmaske auch durch sog. Hinterspritzen, d.h. in einem zwei- oder mehrphasigen Spritzgießprozess realisieren. Ggf. lässt sich eine solche, aus einer Keramik- oder Metallmaske bestehende Fremdlichtsperre auf einfache und kostengünstige Weise in einem Druckgussprozess herstellen. Eine aus Keramik bestehende Fremdlichtsperre lässt sich in vorteilhafter Weise mittels eines Sinterprozesses herstellen.

Die Fremdlichtsperre kann wahlweise auf einer dem Sender und dem Empfänger zugewandten oder abgewandten Seite der Strukturen zur Ein- und Auskoppelung der elektromagnetischen Wellen bzw. des Strukturbauteils aufgebracht sein. Wo die Fremdlichtsperre aufgebracht ist, hängt in erster Linie von den fertigungs- und montagetechnischen Randbedingungen ab, unter denen der Regensensor gefertigt bzw. im Fahrzeug montiert wird.

Bei einem erfindungsgemäßen Verfahren zur Herstellung einer Fremdlichtsperre für einen Regensensor gemäß einer der zuvor beschriebenen Ausführungsformen wird die Fremdlichtsperre mittels eines Spritzgießprozesses auf die Strukturen zur Ein- und Auskoppelung der elektromagnetischen Strahlung aufgebracht. Vorzugsweise wird hierbei die bereits fertig geformte Fremdlichtsperre in eine Druckform eingebracht, in die dann der transparente Thermoplastkunststoff eingespritzt wird, der nach dem Ausformen die Strukturen zur Ein- und Auskoppelung der elektromagnetischen Strahlung bildet. Besteht die Fremdlichtsperre aus einer Kunststoffmaske, kann das Bauteil auch in einem mehrphasigen Spritzgießprozess hergestellt werden. Bei einer Metalloder Keramikmaske wird diese zweckmäßigerweise in die Form eingelegt, bevor in diese der flüssige Kunststoff eingespritzt wird.

Als Verfahren eignet sich insbesondere das sog. IMD-Verfahren, bei dem ein in der Form befindliches Bauteil mit Kunststoff ausgespritzt wird. Hierbei lassen sich annähernd beliebige Hinterschneidungen realisieren. Durch den Spritzgießprozess gehen die Einzelteile eine feste und unlösbare Verbindung ein. Bei geeigneter Abstimmung der Werkstoffe kann eine sehr gute Haftung zwischen den eingesetzten Materialien erzielt werden. Die Haftung kann erforderlichenfalls durch eine geeignete Oberflächenstrukturierung der miteinander zu verbindenden Flächen weiter verbessert werden. Die Oberflächenstrukturierung kann wahlweise in einer Riffelung oder in einer Makrostrukturierung bestehen.

Mit dem erfindungsgemäßen Verfahren kann die über die erforderlichen Lichtaustritts- und Lichteintrittsbereiche verfügende Regensensor in einem einzigen Verarbeitungsprozess zeit- und kosteneffizient gefertigt werden. Durch die Integration kann prinzipiell ein geringerer Bauraum für die optischen Komponenten des Regensensors erzielt werden.

Ggf. können zusätzliche optische Funktionen integriert werden, bspw. Filterfunktionen durch Verwendung eines Farbfilters, der in der Fremdlichtsperre integriert sein kann. Hiermit ist es möglich, Wellenlängenanteile auszufiltern, die außerhalb des Sende- und Empfangsbereiches der Sender und Empfänger liegen. Die Signalgüte und Zuverlässigkeit kann durch die Verwendung eines solchen Filters somit weiter verbessert werden. Der Filter kann bspw. als Kunststofffolie realisiert sein, die Teil einer mehrschichtigen Fremdlichtsperre aus Kunststoff ist.

Die Erfindung wird nachfolgend in bevorzugten Ausführungsbeispielen anhand der zugehörigen Zeichnungen näher erläutert. Dabei zeigt:
- Figur 1: ein Oberteil eines erfindungsgemäßen Regensensors in schematischer Darstellung,
- Figur 2: eine Trägerplatte des Regensensors in schematischer Darstellung und
- Figur 3: den Regensensor in zusammengebautem Zustand und schematischer Darstellung.

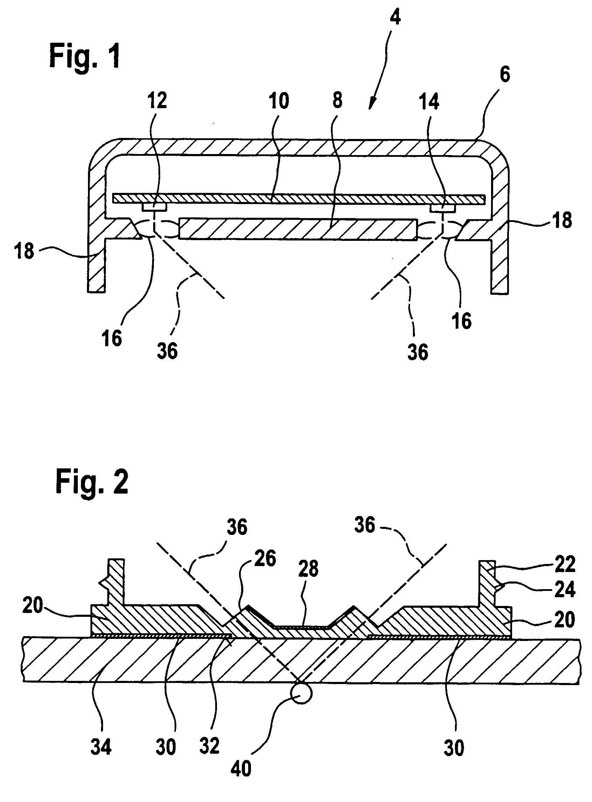

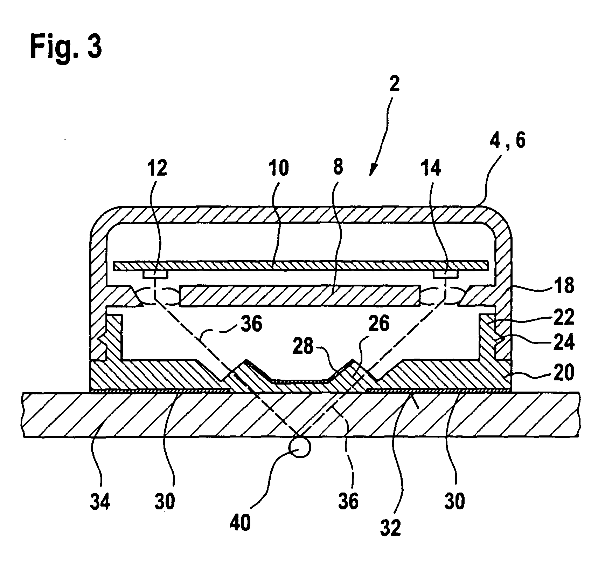

In den Figuren 1 bis 3 ist ein erfindungsgemäßer Regensensor 2 in schematischen Darstellungen gezeigt. Gleiche Teile in den Figuren sind grundsätzlich mit gleichen Bezugszeichen versehen und werden teilweise nicht mehrfach erläutert. Der Regensensor 2 besteht im Wesentlichen aus einem Oberteil 4 mit einem Gehäusedeckel 6 (vgl. Figur 1) und einer Trägerplatte 20 (vgl. Figur 2), auf die das Oberteil 4 aufgesetzt und verrastet werden kann. Der zusammen gebaute Regensensor 2 ist anhand der Figur 3 verdeutlicht.

Im Gehäusedeckel 6 des Oberteils 4 ist eine Leiterplatte 10 befestigt, auf der ein Sender 12 sowie ein Empfänger 14 angeordnet ist. Der Sender 12 kann insbesondere eine LED sein. Der Empfänger 14 kann insbesondere eine Photodiode o. dgl. sein. Die Wellenlängenbereiche von Sender 12 und Empfänger 14 sind zweckmäßigerweise so aufeinander abgestimmt, dass der Sender 12 einen relativ schmalen Wellenlängenbereich abstrahlt und der Empfänger 14 im Wesentlichen nur für diesen Wellenlängenbereich empfindlich ist. Sender 12 und Empfänger 14 befinden sich an gegenüber liegenden Enden der Leiterplatte 10, so dass ein Strahlengang 36 mit schräg ausfallendem und schräg einfallendem Licht gebildet werden kann. Der Ein- und Ausfallswinkel ist gleich und kann in einem sinnvollen Bereich um ca. 45 Grad liegen.

Unterhalb der Leiterplatte 10 ist ein Lichtleiterträger 8 angeordnet, der mit Linsen 16 versehen ist. In jedem Strahlengang 36 des Senders 12 wie auch des Empfängers 14 ist eine derartige Linse 16 angeordnet, die für eine Strahlbündelung sorgt.

Die Leiterplatte 10 weist vorzugsweise eine Schaltung mit der erforderlichen Sende- und Auswerteelektronik auf und ist über einen Stecker (nicht dargestellt) mit dem Fahrzeugbordnetz verbunden.

Der Gehäusedeckel 6 weist eine zylindrische oder quaderförmige Kontur mit herunter gezogenen Seitenteilen 18 auf. Diese dienen zur Verbindung mit seitlichen Raststegen 22 der Trägerplatte 20, die das Unterteil des Regensensors 2 bildet. Die Trägerplatte 20 weist vorzugsweise eine runde oder rechteckförmige Kontur auf, die der Kontur des Gehäusedeckels 6 angepasst ist und ist mit einer Unterseite auf einer Glasscheibe 34 aufgebracht. Die Verbindung zur Glasscheibe 34, die vorzugsweise eine Windschutzscheibe eines Kraftfahrzeuges ist, erfolgt zweckmäßigerweise über eine Klebstoffschicht 32. Damit ist der Regensensor 2 bündig und fest auf der Oberfläche der Glasscheibe 34 aufgebracht. Die Verbindung zum Gehäusedeckel 6 erfolgt über seitlich aus den senkrecht nach oben gezogenen Raststegen 22 ragende Rastnasen 24, die in entsprechende Vertiefungen (nicht dargestellt) an den Innenseiten der Seitenteile 18 einrasten und auf diese Weise für eine feste, jedoch im Bedarfsfall lösbare Verbindung des Oberteils 4 mit dem Unterteil der Trägerplatte 20 sorgen können.

Die Trägerplatte 20 ist weiterhin mit einem transparenten Strukturbauteil 26 zur Ein- und Auskoppelung der Lichtstrahlen aus dem Regensensor 2 und in die Glasscheibe 34 versehen. An der Außenseite der Glasscheibe 34 ist ein Wassertropfen 40 angedeutet, der für eine Veränderung der Brechungsverhältnisse an der Grenzfläche zur Luft sorgt. Diese veränderte Lichtbrechung resultiert in einer variablen Signalabschwächung des vom Empfänger detektierten Lichtanteils und ist ein Maß für die Benetzung der Glasscheibe 34 mit feuchtem Niederschlag.

Das Strukturbauteil 26 der Trägerplatte 20 weist eine erste Fremdlichtsperre 28 auf, die einen zwischen einer Auskoppelstelle für vom Sender 12 ausgestrahltes Licht und einer Einkoppelstelle für vom Empfänger 14 detektiertes Licht liegenden inneren Bereich abdeckt und die für das vom Sender 12 und Empfänger 14 verarbeitete Licht undurchlässig ist. Die erste Fremdlichtsperre 28 kann dafür sorgen, dass im auf den Empfänger 14 treffenden Licht weitest gehend alle Umgebungslichtanteile ausgefiltert bleiben, wodurch die Zuverlässigkeit der vom Regensensor 2 gelieferten Signale erhöht werden kann.

Eine zweite Fremdlichtsperre 30 befindet sich an der Unterseite der Trägerplatte 20 in einem Bereich außerhalb der Ein- und Auskoppelstelle und damit in einem Bereich um die erste Fremdlichtsperre 28. Die zweite Fremdlichtsperre 30 kann aus dem gleichen Material bestehen wie die erste Fremdlichtsperre 28. Für die zweite Fremdlichtsperre eignet sich jedoch insbesondere auch ein Aluminiumblech o. dgl., das mit den erforderlichen Durchbrüchen versehen ist.

Die erste Fremdlichtsperre 28 kann bspw. mit einer Lackschicht oder mit einer Kunststoffschicht realisiert werden, die vorzugsweise mittels eines sog. IMD-Verfahrens (In-Mold-Decoration-Verfahren) auf das Strukturbauteil 26 aufgebracht sind. Hierbei wird die Lack- oder Kunststoffschicht bereits in die Spritzgussform eingebracht, bevor diese unter Druck mit Kunststoff befüllt wird. Auf dem fertigen Kunststoffbauteil befindet sich dann die damit fest verbundene Lack- oder Kunststoffschicht. Die Kunststoffschicht kann insbesondere einen zweischichtigen Aufbau mit einer ersten Schicht aus einer Kunststoffmaske und einer zweiten Schicht aus einer optisch aktiven Kunststofffolie aufweisen. Das Aluminiumblech der zweiten Fremdlichtsperre 30 kann wahlweise auf die Trägerplatte 20 aufgeklebt oder mittels des Spritzgießprozesses mit dieser verbunden werden.

Alternativ kann die erste Fremdlichtsperre 28 auch aus einer Metall- oder Keramikmaske bestehen, deren Öffnungen jeweils den Strahlengang innerhalb der Messstrecke zwischen Sender 12 und Empfänger 14 definieren. Auch für die Herstellung einer festen Verbindung zwischen der formstabilen Maske aus Metall oder Keramik und dem transparenten Strukturbauteil 26 eignet sich insbesondere das IMD-Verfahren.

Alternativ können die Fremdlichtsperren 28, 30 auch durch sog. Hinterspritzen im Spritzgießprozess hergestellt werden. Hierbei werden in einem zweiphasigen Spritzgießprozess gleichzeitig oder nacheinander mehrere Schichten in die Spritzgießform eingebracht, die nach dem Ausformen eine feste und unlösbare Verbindung an ihren Grenzschichten aufweisen. Eine Metallmaske kann auch mittels eines Druckgussverfahrens hergestellt werden, das mit einem nachfolgenden Spritzgießverfahren zur Herstellung des Strukturbauteils aus Kunststoff kombiniert werden kann.

Die Kunststoff- oder Metallmaske der ersten bzw. der zweiten Fremdlichtsperre kann vorzugsweise ausgestanzte Durchbrüche an den Ein- und Auskoppelstellen des Strahlengangs 36 aufweisen, wodurch die Lichtaustritts- und die Lichteintrittsbereiche definiert sind. Die Farbfolie kann insbesondere eine Filterwirkung für Fremdlicht mit anderem Wellenlängenbereich aufweisen. Auf diese Weise kann die Signalgüte des Regensensors 2 weiter verbessert werden.

Die erste Fremdlichtsperre 28 kann wahlweise an der dem Sender 12 und Empfänger 14 zugewandten Innenseite der Trägerplatte 20 aufgebracht sein. Diese Variante ist in den Figuren 2 und 3 verdeutlicht. Sie kann jedoch ebenso an der der Glasscheibe 34 zugewandten Unterseite angebracht sein. Auch die zweite Fremdlichtsperre 30 kann wahlweise außen oder innen aufgebracht sein.

### Bezugszeichenliste

- 2: Regensensor
- 4: Oberteil
- 6: Gehäusedeckel
- 8: Lichtleiterträger
- 10: Leiterplatte
- 12: Sender
- 14: Empfänger
- 16: Linse
- 18: Seitenteil
- 20: Trägerplatte
- 22: Raststeg
- 24: Rastnase
- 26: Strukturbauteil
- 28: erste Fremdlichtsperre
- 30: zweite Fremdlichtsperre
- 32: Klebstoffschicht
- 34: Glasscheibe
- 36: Strahlengang
- 40: Wassertropfen

## Patentansprüche

1. Regensensor, insbesondere für ein Kraftfahrzeug, mit einer wenigstens einen Sender und wenigstens einen Empfänger für elektromagnetische Wellen aufweisenden Messstrecke, in der eine die Wellenausbreitung zwischen dem wenigstens einen Sender und dem wenigstens einen Empfänger derart beeinflussende Windschutzscheibe angeordnet ist, dass sich bei Ausbildung eines Belages auf der Windschutzscheibe, insbesondere bei einer Benetzung durch feuchten Niederschlag, ein vom Empfänger detektiertes Ausgangssignal ändert, und mit Strukturen zur Ein- und Auskoppelung der elektromagnetischen Wellen, die strahlungsbündelnde Eigenschaften aufweisen und auf die eine Fremdlichtsperre (28, 30) aufgebracht ist, **dadurch gekennzeichnet, dass** die Fremdlichtsperre (28, 30) im Wesentlichen aus einer, mittels eines Spritzgießverfahrens mit den Strukturen verbundenen Kunststoff-, Metall- oder Keramikschicht besteht, die nur in den Bereichen der Messstrecke für die elektromagnetischen Wellen durchlässig ist.

2. Regensensor nach Anspruch 1, **dadurch gekennzeichnet, dass** die Strukturen zur Ein- und Auskoppelung der elektromagnetischen Wellen aus einem integrierten Strukturbauteil (26) bestehen.

3. Regensensor nach Anspruch 1 oder 2, **dadurch gekennzeichnet, dass** die Fremdlichtsperre (26, 28) als eine Kunstsfoffschicht bildende Kunststoffmaske mit Öffnungen, insbesondere mit ausgestanzten Öffnungen ausgebildet ist.

4. Regensensor nach Anspruch 3, **dadurch gekennzeichnet, dass** die Kunststoffschicht eine mehrschichtige Kunststofffolie aus übereinander angeordneter Maskenfolie und optisch aktiver Kunststofffolie ist.

5. Regensensor nach Anspruch 3 oder 4, **dadurch gekennzeichnet, dass** die Kunststoffschicht eine spritzgegossene Kunststoffmaske mit Öffnungen ist.

6. Regensensor nach Anspruch 4, **dadurch gekennzeichnet, dass** die für die elektromagnetischen Wellen nicht durchlässige Maskenfolie Öffnungen in den Lichtaustrittsbereichen und den Lichteintrittsbereichen, insbesondere ausgestanzte Öffnungen aufweist.

7. Regensensor nach einem der Ansprüche 4 und 6, **dadurch gekennzeichnet, dass** die optisch aktive Kunststofffolie eine Farbfolie ist.

8. Regensensor nach Anspruch 7, **dadurch gekennzeichnet, dass** die Farbfolie eine Filterwirkung aufweist.

9. Regensensor nach Anspruch 1 oder 2, **dadurch gekennzeichnet, dass** die auf den Strukturen zur Ein- und Auskoppelung der elektromagnetischen Wellen bzw. auf dem Strukturbauteil (26) befindliche Fremdlichtsperre (28, 30) im Wesentlichen aus einer Lackschicht besteht, die nur in den Bereichen der Messstrecke Aussparungen aufweist, die für die elektromagnetischen Wellen durchlässig sind.

10. Regensensor nach Anspruch 1 oder 2, **dadurch gekennzeichnet, dass** die auf den Strukturen zur Ein- und Auskoppelung der elektromagnetischen Wellen bzw. auf dem Strukturbauteil (26) befindliche Fremdlichtsperre (28, 30) im Wesentlichen aus einer Metallschicht besteht, die nur in den Bereichen der Messstrecke für die elektromagnetischen Wellen durchlässig ist.

11. Regensensor nach Anspruch 10, **dadurch gekennzeichnet, dass** die Metallschicht eine Metallmaske mit Öffnungen, insbesondere mit ausgestanzten Öffnungen ist.

12. Regensensor nach Anspruch 1 oder 2, **dadurch gekennzeichnet, dass** die auf den Strukturen zur Ein- und Auskoppelung der elektromagnetischen Wellen bzw. auf dem Strukturbauteil (26) befindliche Fremdlichtsperre (28, 30) im Wesentlichen aus einer Keramikschicht besteht, die nur in den Bereichen der Messstrecke für die elektromagnetischen Wellen durchlässig ist.

13. Regensensor nach Anspruch 12, **dadurch gekennzeichnet, dass** die Keramikschicht eine Keramikmaske mit darin eingebrachten Öffnungen ist.

14. Regensensor nach einem der vorhergehenden Ansprüche, **dadurch gekennzeichnet, dass** die Lichtaustrittsbereiche und die Lichteintrittsbereich durch die Öffnungen der Kunststoff-, der Metall- bzw. der Keramikschicht definiert sind.

15. Regensensor nach einem der vorhergehenden Ansprüche, **dadurch gekennzeichnet, dass** die Fremdlichtsperre (28, 30) auf einer dem Sender (12) und dem Empfänger (14) zugewandten Seite der Strukturen zur Ein- und Auskoppelung der elektromagnetischen Wellen bzw. des Strukturbauteil (26) aufgebracht ist.

16. Regensensor nach einem der Ansprüche 1 bis 14, **dadurch gekennzeichnet, dass** die Fremdlichtsperre (28, 30) auf einer dem Sender (12) und dem Empfänger (14) abgewandten Seite der Strukturen zur Ein- und Auskoppelung der elektromagnetischen Wellen bzw. des Strukturbauteil (26) aufgebracht ist.

17. Verfahren zur Herstellung einer Fremdlichtsperre für einen Regensensor, der eine Messstrecke aufweist, die aus wenigstens einem Sender und wenigstens einem Empfänger für elektromagnetische Wellen gebildet ist, in der eine die Wellenausbreitung zwischen dem wenigstens einen Sender und dem wenigstens einen Empfänger derart beeinflussende Windschutzscheibe angeordnet ist, dass sich bei Ausbildung eines Belages auf der Windschutzscheibe, insbesondere bei einer Benetzung durch feuchten Niederschlag, ein vom Empfänger detektiertes Ausgangssignal ändert, und mit Strukturen zur Ein- und Auskoppelung der elektromagnetischen Wellen, die strahlungsbündelnde Eigenschaften aufweisen, wobei die Strukturen zur Ein- und Auskoppelung der elektromagnetischen Wellen in Bereichen außerhalb der Messstrecke jeweils mit einer für die elektromagnetischen Wellen nicht durchlässigen und auf die Strukturen aufgebrachten Fremdlichtsperre (28, 30) versehen sind, **dadurch gekennzeichnet, dass** die Fremdlichtsperre (28, 30) mittels eines Spritzgießprozesses auf die Strukturen zur Ein- und Auskoppelung der elektromagnetischen Wellen aufgebracht wird.

18. Verfahren nach Anspruch 17, **dadurch gekennzeichnet, dass** die Fremdlichtsperre (28, 30) in einem mehrphasigen Spritzgießprozess aufgebracht wird.

19. Verfahren nach Anspruch 17 oder 18, **dadurch gekennzeichnet, dass** die Fremdlichtsperre (28, 30) mittels eines IMD-Verfahrens aufgebracht wird.

20. Verfahren nach Anspruch 19, **dadurch gekennzeichnet, dass** die Fremdlichtsperre (28, 30) als Maske aus Kunststoff, Metall oder Keramik ausgebildet ist, die vor einem Füllen einer Spritzgussform mit thermoplastischem und transparenten Kunststoff in die Form eingelegt wird.

21. Verfahren nach Anspruch 20, **dadurch gekennzeichnet, dass** die Fremdlichtsperre (28, 30) während des Spritzgießprozesses eine feste und unlösbare Verbindung mit den Strukturen zur Ein- und Auskoppelung der elektromagnetischen Wellen bildet.

## Claims

1. Rain sensor, in particular for a motor vehicle, having a measuring path exhibiting at least one transmitter and at least one receiver for electromagnetic waves and in which there is arranged a windscreen which influences the wave propagation between the at least one transmitter and the at least one receiver in such a way that upon formation of a deposit on the windscreen, in particular upon wetting by moist precipitation, there is a change in an output signal detected by the receiver, and having structures for coupling in and coupling out the electromagnetic waves which exhibit radiation-focusing properties and to which an extraneous light barrier (28, 30) is applied, **characterized in that** the extraneous light barrier (28, 30) consists substantially of a plastic, metal or ceramic layer which is connected to the structures by means of an injection moulding method and is transparent to the electromagnetic waves only in the regions of the measuring path.

2. Rain sensor according to Claim 1, **characterized in that** the structures for coupling in and coupling out the electromagnetic waves comprise an integrated structural component (26).

3. Rain sensor according to Claim 1 or 2, **characterized in that** the extraneous light barrier (28, 30) is constructed as a plastic mask which forms a plastic layer and has openings, in particular has punched-out openings.

4. Rain sensor according to Claim 3, **characterized in that** the plastic layer is a multilayer plastic film made from mask film arranged one upon another and optically active plastic film.

5. Rain sensor according to Claim 3 or 4, **characterized in that** the plastic layer is an injection-moulded plastic mask with openings.

6. Rain sensor according to Claim 4, **characterized in that** the mask film opaque to the electromagnetic waves exhibits openings in the light exit regions and the light entrance regions, in particular punched-out openings.

7. Rain sensor according to one of Claims 4 and 6, **characterized in that** the optically active plastic film is a colour film.

8. Rain sensor according to Claim 7, **characterized in that** the colour film exhibits a filter action.

9. Rain sensor according to Claim 1 or 2, **characterized in that** the extraneous light barrier (28, 30) located on the structures for coupling in and coupling out the electromagnetic waves or on the structural component (26) consists substantially of a coating layer which exhibits only in the regions of the measuring path cutouts which are transparent to the electromagnetic waves.

10. Rain sensor according to Claim 1 or 2, **characterized in that** the extraneous light barrier (28, 30) located on the structures for coupling in and coupling out the electromagnetic waves or on the structural component (26) consists substantially of a metal layer which is transparent to the electromagnetic waves only in the regions of the measuring path.

11. Rain sensor according to Claim 10, **characterized in that** the metal layer is a metal mask having openings, in particular having punched-out openings.

12. Rain sensor according to Claim 1 or 2, **characterized in that** the extraneous light barrier (28, 30) located on the structures for coupling in and coupling out the electromagnetic waves or on the structural component (26) consists substantially of a ceramic layer which is transparent to the electromagnetic waves only in the regions of the measuring path.

13. Rain sensor according to Claim 12, **characterized in that** the ceramic layer is a ceramic mask into which openings are introduced.

14. Rain sensor according to one of the preceding claims, **characterized in that** the light exit regions and the light entrance regions are defined by openings in the plastic layer, the metal layer or the ceramic layer.

15. Rain sensor according to one of the preceding claims, **characterized in that** the extraneous light barrier (28, 30) is applied to a side of the structures for coupling in and coupling out the electromagnetic waves, or of the structural component (26), which faces the transmitter (12) and the receiver (14).

16. Rain sensor according to one of Claims 1 to 14, **characterized in that** the extraneous light barrier (28, 30) is applied to a side of the structures for coupling in and coupling out the electromagnetic waves, or of the structural component (26), that is averted from the transmitter (12) and the receiver (14).

17. Method for producing an extraneous light barrier for a rain sensor which has a measuring path which is formed from at least one transmitter and at least one receiver for electromagnetic waves and in which there is arranged a windscreen which influences the wave propagation between the at least one transmitter and the at least one receiver in such a way that upon formation of a deposit on the windscreen, in particular upon wetting by moist precipitation, there is a change in an output signal detected by the receiver, and having structures for coupling in and coupling out the electromagnetic waves which exhibit radiation-focusing properties, the structures for coupling in and coupling out the electromagnetic waves being respectively provided in the regions outside the measuring path with an extraneous light barrier (28, 30) which is opaque to the electromagnetic waves and is applied to the structures, **characterized in that** the extraneous light barrier (28, 30) is applied to the structure for coupling in and coupling out the electromagnetic waves by means of an injection moulding process.

18. Method according to Claim 17, **characterized in that** the extraneous light barrier (28, 30) is applied in a multiphase injection moulding process.

19. Method according to Claim 17 or 18, **characterized in that** the extraneous light barrier (28, 30) is applied by means of an IMD method.

20. Method according to Claim 19, **characterized in that** the extraneous light barrier (28, 30) is constructed as a mask which is made from plastic, metal or ceramic and which is laid into an injection mould before the latter is filled with thermoplastic and transparent plastic.

21. Method according to Claim 20, **characterized in that** the extraneous light barrier (28, 30) forms a firm and indissoluble connection with the structures for coupling in and coupling out the electromagnetic waves during the injection moulding process.

## Revendications

1. Capteur de pluie notamment pour un véhicule automobile, comportant un chemin de mesure ayant au moins un émetteur et au moins un récepteur d'ondes électromagnétiques, chemin dans lequel se trouve un pare-brise qui influence le développement des ondes entre l'émetteur et le récepteur de façon que lorsque se développe un dépôt sur le pare-brise, en particulier le mouillage du pare-brise par un dépôt humide, le signal de sortie détecté par le réflecteur change et des structures sont prévues qui ont des propriétés de regroupement de faisceaux pour coupler et découpler les ondes électromagnétiques et sur lesquelles est prévue une barrière contre la lumière étrangère (28, 30),
**caractérisé en ce que**
la barrière contre la lumière étrangère (28, 30) se compose principalement d'une couche de matière plastique, de métal ou de matière céramique, reliée par injection aux structures, cette couche étant transparente aux ondes électromagnétiques seulement dans les zones du chemin de mesure.

2. Capteur de pluie selon la revendication 1,
**caractérisé en ce que**
les structures pour coupler et découpler les ondes électromagnétiques sont formées d'un composant de structure intégrée (26).

3. Capteur de pluie selon la revendication 1 ou 2,
**caractérisé en ce que**
la barrière contre la lumière étrangère (26, 28) est réalisée par une couche de matière plastique formant un masque avec des ouvertures, notamment des ouvertures matricées.

4. Capteur de pluie selon la revendication 3,
**caractérisé en ce que**
la couche de matière plastique est un film de matière plastique à plusieurs couches formées d'une superposition de films constituant un masque et de films de matière plastique à activité optique.

5. Capteur de pluie selon la revendication 3 ou 4,
**caractérisé en ce que**
la couche de matière plastique est un masque en matière plastique injectée comportant des ouvertures.

6. Capteur de pluie selon la revendication 4,
**caractérisé en ce que**
le film formant un masque non transparent aux ondes électromagnétiques comporte des ouvertures dans les zones de sortie de la lumière et des zones d'entrée de la lumière, notamment des ouvertures matricées.

7. Capteur de pluie selon l'une des revendications 4 et 6,
**caractérisé en ce que**
le film de matière plastique optiquement actif est un film teinté.

8. Capteur de pluie selon la revendication 7,
**caractérisé en ce que**
le film teinté a un effet de filtre.

9. Capteur de pluie selon la revendication 1 ou 2,
**caractérisé en ce que**
la barrière contre la lumière étrangère (28, 30) prévue sur les structures pour coupler et découpler les ondes électromagnétiques ou sur un composant de structure (26) se compose principalement d'une couche de vernis qui ne comporte des dégagements que dans les zones des chemins de mesure transparentes aux ondes électromagnétiques.

10. Capteur de pluie selon la revendication 1 ou 2,
**caractérisé en ce que**
la barrière contre la lumière étrangère (28, 30) prévue sur les structures pour coupler et découpler les ondes électromagnétiques ou sur le composant de structure (26) est formée principalement d'une couche métallique qui est transparente aux ondes électromagnétiques que dans les zones du chemin de mesure.

11. Capteur de pluie selon la revendication 10,
**caractérisé en ce que**
la couche métallique est un masque de métal avec des ouvertures, notamment des ouvertures découpées à la matrice.

12. Capteur de pluie selon la revendication 1 ou 2,
**caractérisé en ce que**
la barrière contre la lumière étrangère (28, 30) prévue sur les structures pour coupler et découpler les ondes électromagnétiques ou sur le composant de structure (26) se compose principalement d'une couche en céramique qui n'est transparente aux ondes électromagnétiques que dans les zones du chemin de mesure.

13. Capteur de pluie selon la revendication 12,
**caractérisé en ce que**
la couche en céramique est un masque en céramique muni d'orifices réalisés dans le masque.

14. Capteur de pluie selon l'une des revendications précédentes,
**caractérisé en ce que**
la zone de sortie de lumière et la zone d'entrée de lumière est définie par les ouvertures de la couche de matière plastique, de la couche de métal ou de la couche de céramique.

15. Capteur de pluie selon l'une des revendications précédentes,
**caractérisé en ce que**
la barrière contre la lumière étrangère (28, 30) est appliquée sur le côté des structures tourné vers l'émetteur (12) et le récepteur (14) pour coupler et découpler les ondes électromagnétiques ou sur le composant de structure (26).

16. Capteur de pluie selon l'une des revendications 1 à 14,
**caractérisé en ce que**
la barrière contre la lumière étrangère (28, 30) est appliquée sur le côté des structures non tourné vers l'émetteur (12) et le récepteur (14) pour coupler et découpler les ondes électromagnétiques ou du composant de structure (26).

17. Procédé de réalisation d'une barrière contre la lumière étrangère pour un capteur de pluie comportant un chemin de mesure formé d'au moins un émetteur et d'au moins un récepteur d'ondes électromagnétiques, chemin dans lequel se trouve le pare-brise qui influence le développement des ondes entre l'émetteur et le récepteur de façon que lorsque se développe un dépôt sur le pare-brise, notamment lorsqu'il est mouillé par un dépôt humide, le signal de sortie détecté par le récepteur change et les structures pour coupler et découpler des ondes électromagnétiques ayant des caractéristiques de regroupement du faisceau, les structures étant munies d'une barrière contre la lumière étrangère (28, 30) en dehors du chemin de mesure qui n'est pas transparente aux ondes électromagnétiques,
**caractérisé en ce que**
la barrière contre la lumière étrangère (28, 30) est appliquée par injection sur les structures pour coupler et découpler les ondes électromagnétiques.

18. Procédé selon la revendication 17,
**caractérisé en ce que**
la barrière contre la lumière étrangère (28, 30) est appliquée par un procédé d'injection en plusieurs phases.

19. Procédé selon la revendication 17 ou la revendication 18,
**caractérisé en ce que**
la barrière contre la lumière étrangère (28, 30) est appliquée par un procédé (IMD).

20. Procédé selon la revendication 19,
**caractérisé en ce que**
la barrière contre la lumière étrangère (28, 30) est un masque en matière plastique, en métal ou en céramique que l'on place dans le moule avant de le remplir avec de la matière thermoplastique transparente.

21. Procédé selon la revendication 20,
**caractérisé en ce que**
la barrière contre la lumière étrangère (28, 30) forme pendant l'injection une liaison solide et définitive avec les structures pour coupler et découpler les ondes électromagnétiques.
